# EUROPEAN PATENT APPLICATION

(11) **EP 4 559 667 A1**
(43) Date of publication of application: **28.05.2025**
(21) Application number: 23383197.3
(22) Date of filing: 22.11.2023
(51) Int. Cl.: B29C 73/02, B29C 73/10, B29C 73/26

(54) **METHOD FOR REPAIRING AN ELEMENT OF COMPOSITE MATERIAL**

(71) Applicant: Airbus Operations S.L.U., 28906 Getafe, Madrid (ES); Airbus Operations Limited, Bristol BS34 7PA (GB)
(72) Inventor: NIETO LEON, Ines, 28906 Madrid (ES); KHEMIRI, Nizar, 28906 Madrid (ES); GARCIA LOPEZ-VARELA, Jorge, 28906 Madrid (ES)
(74) Representative: Elzaburu S.L.P.

(57) **Abstract**

Method for repairing an element (100) of composite material, the method comprising, upon detection of an internal damaged area (101) within the element (100) of composite material, infusing a resin (300) into the internal damaged area (101) of the element (100) of composite material, wherein the method further comprises: drilling on the element (100) of composite material at least one first non-through hole (200a) and at least one second non-through hole (200b), each of the non-through holes (200) running from one face of the element (100) of composite material up to the internal damaged area (101), and; applying vacuum at the at least one second non-through hole (200b) and infusing the resin (300) from the at least one first non-through hole (200a) until the resin (300) fills at least the internal damaged area (101) of the element (100) of composite material.

## Description

### Technical field

The present invention is directed to a method for repairing an element of composite material, specially indicated for repairing aircraft parts or components made of thermoset composite materials. The method is intended for repairing structural parts or components of an aircraft which have suffered a damage, allowing for the restoration of the mechanical strength of such part or component to its initial design requirements.

This invention is preferably applicable in the field of manufacturing and maintenance of composite parts/components for transport applications such as aircrafts.

### Background of the invention

Composite materials forming parts or components of an aircraft often suffer internal damages, due to several causes such as impacts with objects.

These internal damages cannot be detected by a visual inspection of the aircraft. However, internal cracks or damages can be detected using non-destructive methods such as ultrasonic inspection methods.

The internal cracks or damages in composite components of the aircraft can have an impact on the structural properties. Thus, it is essential to detect these internal damages and repair them.

Currently, bonded repairs involve machining out the damaged plies on the area by stepping or scarfing the surface around the damage using a grinding or milling machining process. The step length usually is between 8 and 12 mm, and the scarf ratio is usually less than 1:20. A wet lay-up repair, hot-bond repair, or a pre-cured patch repair method can be used to apply a repair patch to the parent structure.

Wet lay-up repair consists of a dry fibre fabric impregnated with laminating resin and then applied to a cured composite part.

Hot bond repair is the use of repair prepreg composite materials and an adhesive film to make a bonded repair.

For wet lay-up and hot bond scarf repairs, the repair plies are cut to precise dimensions to allow installation of the repair laminate while achieving a defined overlap length of contact with the original laminate along the stepped or the scarfed surface. This overlap length is generally about 8 - 12mm.

In these approaches, a curing cycle is applied to cure repair materials. In addition, vacuum pressure must be applied to consolidate the repair by means of a vacuum bag.

Hot-bond and wet lay-up repairs are widely used by airlines for repairs on thermoset composite parts. However, the storage under certain temperature conditions and shelf-life limit of prepreg composite repair materials, used for hot bond repair, is considered to be the main disadvantage of this repair method. Moreover, controlling the ratio of the different components to prepare the repair resin and ratio for dry fabric impregnation may be difficult to achieve for wet lay-up repair. Additionally, in most applications, the repair material has lower material properties than the part to be repaired, due to different fibre and resin material and curing process compared to the parent material.

Another disadvantage of current bonded repair methods, hot bond and wet lay-up repairs, is the relatively long time associated with completion of the bonded repair. The machining of the damaged plies is the most time-consuming phase plus there is a risk of creating new damages. Another time-consuming step is related to the strict repair ply preparation procedure. In addition, the positioning of the uncured plies must be precise to achieve the minimum overlap along the edge of the plies.

### Summary of the invention

With the aim of providing a solution to the abovementioned problems, the present invention refers to a method for repairing an element of composite material.

The method for repairing an element (or component) of composite material comprises, upon detection of an internal damaged area (porosities or delaminated material) within the element of composite material, infusing a resin into the internal damaged area of the element of composite material.

In a novel manner, the method for repairing an element (or component) of composite material comprises:
- drilling the element of composite material with at least one first non-through hole (preferably of a small diameter of, for example, approximately 2 mm) and at least one second non-through hole (preferably of a small diameter of, for example, approximately 2 mm), each of the non-through holes running from one face of the element of composite material up to (at least) the internal damaged area, and;
- applying vacuum at the at least one second non-through hole and infusing the resin from the at least one first non-through hole until the resin fills at least part of the internal damaged area of the element of composite material. Preferably, the resin infused fills both the internal damaged area and the non-through holes.

The vacuum loading can be applied continuously at a constant value or in an alternating percussion mode (e.g., the vacuum may be applied "On" and "Off" at a given frequency).

Thanks to the method specified above, there is no need to perform any machining out operation on the element or component of composite material to be repaired. The restoration of the loading capacity of the element of composite material is achieved by means of the resin infusion, and the resin infusion is applied by injecting the resin through non-through holes (non-passing-through holes), thereby reducing the structural impact of these holes on the structural integrity and loading capacity of the element of composite material.

The method for repairing an element (or component) of composite material may comprise heating the resin prior to infusing the resin into the internal damaged area of the element of composite material. This operation may reduce the viscosity value of the resin, thereby facilitating the infusion process.

The method for repairing an element (or component) of composite material may comprise infusing a structural resin into the internal damaged area of the element of composite material. This structural resin may, for instance, be a bicomponent epoxy resin, such as, for example, EPOCAST 52^{®}. This feature ensures that a great amount of the load capacity of the element of composite material is restored after resin infusion.

According to a preferred embodiment of the present invention, the method for repairing an element of composite material comprises, after infusing the resin into the internal damaged area of the element of composite material, bonding a repair patch to at least one face (or side) of the element of composite material, the repair patch comprising at least one reinforcement precured ply of composite material.

This feature allows to achieve a higher load capacity in case the resin infusion does not fully restore the full strength of the panel of the element of composite material. Furthermore, since resin injection will partially or fully restore the mechanical strength of the composite part, the use of pre-cured reinforcement plies, when required, will restore the full component strength with fewer number of plies (when compared to other conventional repair methods) because they are precured plies, no wet lay-up or hot-bond repair plies.

The repair patch may comprise a plurality of reinforcement precured plies bonded to one another by means of adhesive layers.

The adhesive is used between precured plies to build up the full patch stacking. The adhesive layers are cured simultaneously to the curing of the infused resin. The curing of the adhesive and the infused resin is thus obtained as a "one shot curing cycle".

The repair patch may further comprise a film of adhesive on one face of the repair patch configured to be adhered to the element (or component) of composite material.

The repair patch may comprise at least one peel ply configured to protect at least one side of the reinforcement precured ply.

Thus, the method for repairing an element (or component) of composite material may comprise, prior to attaching the repair patch to at least one side of the element of composite material, removing the at least one peel ply from one side of the repair patch.

According to one embodiment of the invention, each reinforcement precured ply of the repair patch is made of the same composite material as that of the element (or component) of composite material. In this case, scrapped parts of other composite material elements can be reused for the repair method of the invention. The repair plies are precured in an autoclave.

The method may further comprise smoothing the edges of the repair patch and the transition surface between the repair patch and the repaired element of composite material by means of an aerodynamic smoother material. That is, the method may comprise smoothing the transition edges between the different precured plies of the repair patch by using aerodynamic smoother material. This feature allows for smoothing this transition surface between the repair patch and the surface of the repaired element of composite material.

The at least one first non-through-hole and the at least one second non-through-hole may run from one and the same face of the element of composite material up to, at least, the internal damaged area. Such embodiment allows to repair an element of composite material to which there is only access to one of its faces.

Conversely, in an alternative embodiment of the method of the present invention, the at least one first non-through-hole runs from a first face of the element of composite material up to, at least, the internal damaged area, while the at least one second non-through-hole runs from a second face of the element of composite material up to, at least, the internal damaged area. This embodiment allows to infuse resin on one face of the element of composite material and apply vacuum on the other face of the element of composite material. It therefore facilitates the infusion of the resin when both faces are accessible for the repair method.

According to the embodiment mentioned in the previous paragraph, there is the possibility that each first non-through-hole and each second non-through-hole are distributed in such a way that the projection of each first non-through-hole on the second face of the element of composite material does not coincide with the projection of any second non-through-hole on the second face of the element of composite material and vice versa. Thus, the non-through-holes are distributed such that the second non-through-holes are not in front of the first non-through-holes.

The new repair method of the present invention of bonded repair is intended to restore the mechanical strength of the repaired area, reducing the time and cost to perform a bonded repair and the amount of material used to perform the repair. This new method also helps to reduce the environmental footprint of part manufacturing of thermoset composite materials and reduce the cost of the provision and storage of repair materials.

The new repair patch of reinforcement pre-cured plies is easy to handle and to achieve a precise overlap length of 8 to 12 mm. As the damage is not removed by machining of the surface, there is no scarfing or stepping in the parent material or on the repair material interface. The surface smoothing may be done in the outer plies to preserve a more aerodynamic outer surface without steps.

Repair material may be the same as parent material or of similar grade and equivalent fibre and resin. Hence the material properties are equivalent to the parent structure.

It is also possible to select a repair material (pre-cured plies) different to the original material. The benefit lies in having a simple stock of pre-cured plies to be used for any damaged monolithic parts.

Repair composite plies are pre-cured at high temperature and under high pressure in a controlled environment (i.e. cured in autoclave) which implies better resin consolidation and higher strength properties compared to curing only under vacuum pressure.

There is no limitation of storage life of the pre-cured repair material if supplied with no adhesive layer.

Pre-cured layers of composite panels may be manufactured and supplied to users in a standard size. This implies the reuse of composite pre-preg scrap materials generated during the manufacturing of composite parts, reduced environmental footprint associated with the removal and disposal of the scrap material.

There is no need to remove the damaged area.

There is the possibility of supplying repair plies with peel ply on both sides to prevent surface contamination and to secure required surface preparation readiness for the bonding step.

The use of reinforcement pre-cured plies provides a fast repair solution for making repairs, the flexibility and ease of building a repair stacking sequence and achieving a correct positioning of the plies.

The use of resin infusion to consolidate the damaged area reduces the number of reinforcement pre-cured repair plies to restore the initial strength requirement of the structure.

Reinforcement pre-cured plies can be obtained from scrapped parts/laminates (i.e. the end of prepreg rolls used in Automatic Tape Lay-up machines) contributing to sustainability and recyclability of material and resources.

### Brief description of the drawings

As a means for better understanding at least one embodiment of the present invention, the following set of drawings is introduced by way of schematic illustration and in a non-limitative manner.
Figure 1: Shows a schematic view of a conventional scarf repair of an element of composite material.
Figure 2: Shows a schematic view of an element of composite material with an internal damaged area.
Figure 3: Shows a schematic view of the element of composite material of Figure 3, with several non-through holes drilled from both faces of the element of composite material up to the internal damaged area.
Figure 4: Shows a schematic view of the element of composite material of Figure 4, wherein the internal damaged area and the non-through holes have been filled with resin.
Figure 5: Shows a schematic view of the element of composite material of Figure 5, where a repair patch of reinforcement precured plies has been attached to one of the faces of the element of composite material.
Figure 6: Shows a schematic side view of a precured repair ply. Peel ply can be added to both sides of the precured ply to prevent surface contamination.

### Detailed description

The present invention, as already introduced, refers to a method for repairing an element (100) of composite material. More particularly, the invention refers to a bonded repair method for a composite material component.

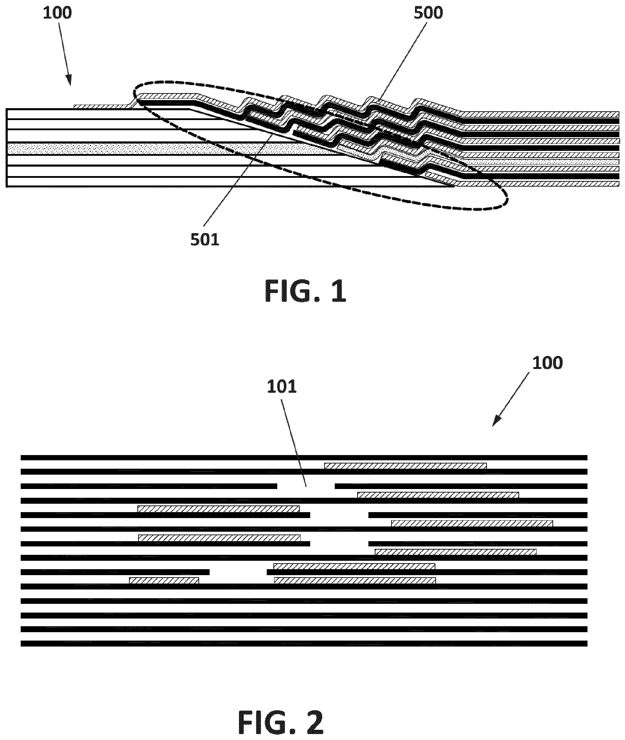

Figure 1 shows a schematic view of an element (100) of composite material repaired according to a conventional method, in which both the damaged or cracked surface of the element (100) to be repaired and the contact surface (501) of the repair ply (500) have been machined or scarfed (e.g., using a grinding or milling machining process) and the repair ply (500) has been cut to precise dimensions to allow attaching the repair ply (500) to the element (100) to be repaired and achieving a defined overlap length of contact surface (501) with the element (100) to be repaired along the stepped or the scarfed contact surface (501).

Figure 2 to Figure 5 respectively represent consecutive phases in the repairing method of the present invention.

The conflicting situation arises when an internal damage or crack occurs in an element (100) of composite material, as illustrated in Figure 2. This damage or crack involves the generation of at least one internal cavity of delaminated material in the interior of the element (100) of composite material.

The method comprises, upon detection (e.g., by means of an ultrasound inspection method) of an internal damage area (101) or an internal crack within a component or an element (100) of composite material, drilling a plurality of non-through-holes (200) from at least one of the sides (102) or faces of the element (100) of composite material, each of the non-through-holes (200) running from one of the sides (102) or faces of the element (100) of composite material up to the internal damaged area (101) (or internal cracked area) within the element (100) of composite material.

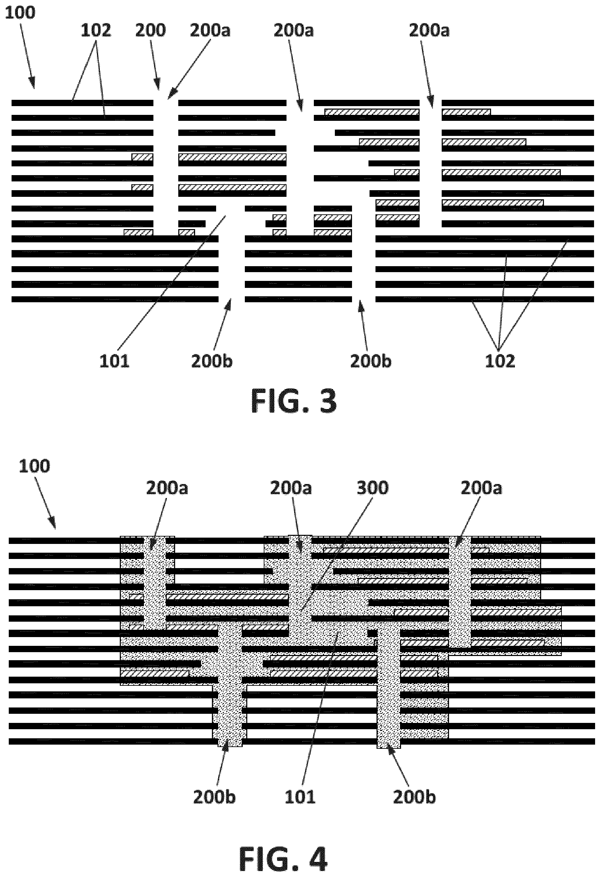

Figure 3 shows a plurality of non-through holes (200) drilled from each of the sides (102) or faces of the element (100) of composite material.

As already introduced, the internal damaged area (101) typically comprises at least one internal cavity where the structure of composite material has been delaminated creating areas of disbanding between plies.

The holes drilled on the element (100) of composite material to be repaired are non-through-holes (200) (non-passing-through holes) of a reduced diameter (typically 2 mm diameter), such that the integrity and structure of the element (100) of composite material is not critically affected.

The method comprises infusing a resin (300) from at least one first non-through-hole (200a) and applying vacuum from at least one second non-through-hole (200b).

By means of the vacuum applied from at least one second non-through-hole (200b), air is extracted from the internal damaged area (101) and the resin (300) flows from the at least one first non-through-hole (200a), flooding the internal damaged area (101) of the element (100) of composite material, up to the at least one second non-through-hole (200b).

The vacuum can be applied continuously or in a percussion mode where "on" and "off" vacuum is applied at a given frequency.

Figure 4 shows the internal damaged area (101) of the element (100) of composite material and the non-through holes (200) filled with resin (300).

The resin (300) infused within the internal damaged area (101) is a structural resin (300), such as a bicomponent epoxy resin, for example EPOCAST 526.

The resin (300) can be heated prior to the infusion into the internal damaged area (101), so as to reach the lowest viscosity value to ease the infusion into the damaged internal area (101).

Once the resin (300) has been infused into the internal damaged area (101) of the element (100) of composite material and once the resin (300) and the precured plies is cured, the structural properties (resistance and load capability) of the element (100) of composite material are fully restored.

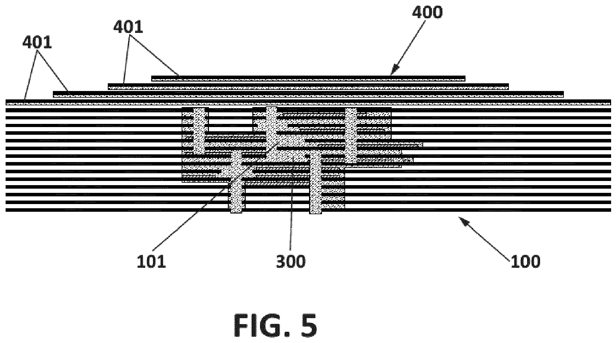

The method may further comprise, as schematically illustrated in Figure 5, adding repair patch (400) made of at least one reinforcement precured ply (401) of composite material upon one of the sides or faces of the element (100) of composite material.

The repair patch (400) may comprise a plurality of reinforcement precured plies (401) on the at least one side or face of the element (100) of composite material, the precured plies (401) being overlapped on top of the element (100) of composite material.

The reinforcement precured plies (401) may be made of the same composite material as that of the element (100) or component to be repaired. The reinforcement precured plies (401) may be cured together by means of the same curing process as that of the composite material (parent material) of the element (100) or component to be repaired (e.g., by means of an autoclave).

When several reinforcement precured plies (401) are used, the different reinforcement precured plies (401) may be adhered to one another by means of an adhesive layer. The different reinforcement precured plies (401) are pressed together by means of vacuum pressure and a curing cycle is applied to the adhesive layer.

The reinforcement precured plies (401) can be obtained from scrapped parts/laminates (i.e. the end of prepreg rolls used in Automatic Tape Lay-up machines) contributing to sustainability and recyclability of material and resources.

The at least one reinforcement precured ply (401) thereby forms the repair patch (400) on top of the element (100) to be repaired. The use of a single reinforcement precured ply (401), or several reinforcement precured plies (401) may depend on the number of damaged plies of the element (100) (composite component) to be repaired. The repair patch (400) with at least one reinforcement precured ply (401) generates at least one step or rung on the surface of the element (100). The thickness of each step depends on the material used for the precured ply. The overlap of each step can vary from 8 to 12 mm.

The repair patch (400) comprises a film (403) of adhesive or laminated resin on at least one of its faces, namely on a face of the reinforcement precured ply (401) so that the repair patch (400) is configured to be adhered to the element (100) or component to be repaired.

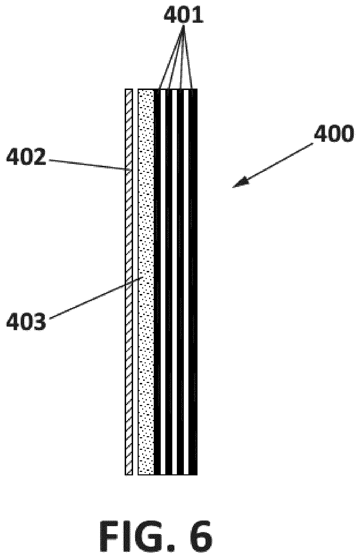

The repair patch (400) may comprise a peel ply (402) in order to protect the film (403) of adhesive or laminated resin, as illustrated in Figure 6.

The method may further comprise smoothening the edges of the repair patch (400) for achieving an enhanced smoothness of the transition surface between the repair patch plies (401) with an aerodynamic surface smoother.

## Claims

1. Method for repairing an element (100) of composite material, the method comprising, upon detection of an internal damaged area (101) within the element (100) of composite material, infusing a resin (300) into the internal damaged area (101) of the element (100) of composite material, wherein the method is **characterised in that** it comprises:
- drilling the element (100) of composite material with at least one first non-through hole (200a) and at least one second non-through hole (200b), each of the non-through holes (200) running from one face of the element (100) of composite material up to, at least, the internal damaged area (101), and;
- applying vacuum at the at least one second non-through hole (200b) and infusing the resin (300) from the at least one first non-through hole (200a) until the resin (300) fills at least part of the internal damaged area (101) of the element (100) of composite material.

2. Method for repairing an element (100) of composite material according to claim 1, **characterized in that** it comprises heating the resin (300) prior to infusing the resin (300) into the internal damaged area (101) of the element (100) of composite material.

3. Method for repairing an element (100) of composite material according to claim 1 or 2, **characterized in that** the resin (300) infused into the internal damaged area (101) of the element (100) of composite material is a structural resin (300).

4. Method for repairing an element (100) of composite material according to claim 3, **characterized in that** the resin (300) is a bicomponent epoxy resin.

5. Method for repairing an element (100) of composite material according to any preceding claim, **characterized in that** it comprises, after infusing the resin (300) into the internal damaged area (101) of the element (100) of composite material, bonding a repair patch (400) to at least one face of the element (100) of composite material, the repair patch (400) comprising at least one reinforcement precured ply (401) of composite material.

6. Method for repairing an element (100) of composite material according to claim 5, **characterized in that** the repair patch (400) comprises a plurality of reinforcement precured plies (401) bonded to one another by means of adhesive layers.

7. Method for repairing an element (100) of composite material according to claim 5 or 6, **characterized in that** the repair patch (400) comprises a film of adhesive on one face of the repair patch (400) configured to be adhered to the element (100) of composite material.

8. Method for repairing an element (100) of composite material according to any of claims 5 to 7, **characterized in that** it comprises, prior to attaching the repair patch (400) to at least one side of the element (100) of composite material, removing at least one peel ply (402) from one side of the repair patch (400), the at least one peel ply (402) being configured to protect the at least one reinforcement precured ply (401).

9. Method for repairing an element (100) of composite material according to any of claims 5 to 8, **characterized in that** each reinforcement precured ply (401) of the repair patch (400) is made of the same composite material as that of the element (100).

10. Method for repairing an element (100) of composite material according to any of claims 5 to 9, **characterized in that** it comprises smoothing the edges of the repair patch (400) and the transition surface between the repair patch (400) and the repaired element (100) of composite material by means of an aerodynamic smoother material.

11. Method for repairing an element (100) of composite material according to any preceding claim, **characterized in that** the at least one first non-through-hole (200a) and the at least one second non-through-hole (200b) run from one and the same face of the element (100) of composite material up to, at least, the internal damaged area (101).

12. Method for repairing an element (100) of composite material according to any of claims 1 to 10, **characterized in that** the at least one first non-through-hole (200a) runs from a first face of the element (100) of composite material up to, at least, the internal damaged area (101) and the at least one second non-through-hole (200b) runs from a second face of the element (100) of composite material up to, at least, the internal damaged area (101).

13. Method for repairing an element (100) of composite material according to claim 12, **characterized in that** each first non-through-hole (200a) and each second non-through-hole (200b) are distributed in such a way that the projection of each first non-through-hole (200a) on the second face of the element (100) of composite material does not coincide with the projection of any second non-through-hole (200b) on the second face of the element (100) of composite material and vice versa.
